Europäisches Patentamt

European Patent Office

Office européen des brevets

(19)

(11) Veröffentlichungsnummer: **0 212 235**
A2

## (12) EUROPÄISCHE PATENTANMELDUNG

(21) Anmeldenummer: 86109592.5

(22) Anmeldetag: 14.07.86

(51) Int. Cl.⁴: **A 01 K 7/00**

(30) Priorität: 16.08.85 DE 3529286

(43) Veröffentlichungstag der Anmeldung: 04.03.87
Patentblatt 87/10

(84) Benannte Vertragsstaaten: FR GB

(71) Anmelder: Amazonen-Werke H. Dreyer GmbH & Co. KG,
Am Amazonenwerk 9-13, D-4507 Hasbergen-Gaste (DE)

(72) Erfinder: Oberheide, Friedrich, Kiefernweg 15,
D-4507 Hasbergen (DE)

(54) Landwirtschaftliche Feldspritze mit einem Spritzgestänge.

(57) Landwirtschaftliche Feldspritze mit einem Spritzgestänge, welches in mehrere Abschnitte unterteilt ist, die
mittels Gelenke, deren Schwenkachsen aufrecht verlaufen,
miteinander verbunden und in eine gestreckte Lage (Arbeitsstellung) sowie eine zusammengefaltete Stellung
(Transportstellung) bringbar sind. Um ein kompaktes zusammenfaltbares Spritzgestänge, welches in der zusammengefalteten Stellung wenig Raum beansprucht, so wie in
eine Lage zu bringen ist, in der alle in dem Spritzgestänge
angeordneten Spritzdüsen nach unten weisen, zu schaffen,
wobei das zusammengefaltete Spritzgestänge nicht die
seitliche Zugänglichkeit des Spritzmitteltanks der Feldspritze behindert, ist vorgesehen, daß der jeweilige innerste
Abschnitt des Spritzgestänges im Gegensatz zu den Achsen
der übrigen Gelenke mit einem Gelenk angelenkt ist, dessen Schwenkachse zumindest annähernd horizontal und in
Fahrtrichtung der Feldspritze verläuft.

Amazonen-Werke

H. Dreyer GmbH & Co. KG

Am Amazonenwerk 9 - 13

4507 Hasbergen-Gaste

ANR 1 000 667

Landwirtschaftliche Feldspritze mit einem Spritzgestänge

Die Erfindung betrifft eine landwirtschaftliche Feldspritze mit einem Spritzgestänge gemäß des Oberbegriffes des Patentanspruches 1.

Eine derartige landwirtschaftliche Feldspritze mit einem Spritzgestänge ist durch die DE-PS 31 19 093 bekannt. Dieses Spritzgestänge ist in mehrere Abstände unterteilt. Die einzelnen Abschnitte dieses Spritzgestänges sind jeweils mit Gelenken verbunden, deren Schwenkachsen aufrecht verlaufen. Mittels dieser Gelenke kann das Spritzgestänge in eine gestreckte Lage, in der es beidseitig die Feldspritze quer zur Fahrtrichtung gesehen überragt und als Arbeitsstellung bezeichnet wird, gebracht werden. Weiterhin kann dieses Spritzgestänge zick-zack-förmig zusammengefaltet und so in die Transportstellung gebracht werden. In der Transportstellung befindet sich jeweils eine zusammengefaltete Seite des Spritzgestänges seitlich neben dem Tank der Feldspritze. Das zusammengefaltete Spritzgestänge überragt den Tank der bekannten Feldspritze nicht nach vorn. Jedoch überragt das Spritzgestänge den Tank der Feldspritze erheblich nach hinten. Von Vorteil ist bei dem Spritzgestänge der bekannten Feldspritze, daß das Spritzgestänge in eine Transportstellung gebracht werden kann, in der die in dem

2

Spritzgestänge angeordneten Düsen sich auf der Unterseite des Spritzgestänges, wie in der Arbeitsstellung, befinden. Somit ist es in vorteilhafter Weise möglich, die in dem Spritzgestänge untergebrachten Spritzmittelleitungen sowie die Düsen in der zusammengefalteten Lage des Spritzgestänges zu reinigen. Es ist nicht erforderlich, daß zum Reinigen der Feldspritze bzw. der Spritzmittelleitungen sowie der Düsen das Spritzgestänge in die gestreckte Lage (Arbeitsstellung) gebracht werden muß. Auch ist es ebenfalls in vorteilhafter Weise möglich, daß die Bestimmung der Ausbringmenge der Spritze durch Auslitern der aufgefangenen und von den Düsen ausgestoßenen Flüssigkeitsmenge in der zusammengefalteten Stellung möglich ist.

Nachteilig ist jedoch bei der bekannte Feldspritze, daß die Feldspritze relativ breit bzw. hoch baut, da sich das Gestänge in der zusammengefalteten Stellung (Transportstellung) sich seitlich neben dem Tank oder oberhalb des Tankes befindet. Weiterhin ergibt sich durch das Einfalten des Spritzgestänges seitlich neben dem Tank noch der weitere Nachteil, daß der Tank der Feldspritze relativ schlech zu befüllen ist. Das zusammengefaltete Paket des Spritzgestänges verhindert die direkte Zugänglichkeit zu dem Einfüllstutzen des Tankes. Die Lage des Spritzgestänges oberhalb des Tankes ist wegen der Schwerpunktverschiebung der Feldspritze nach oben nachteilig, weil hierdurch große Kippgefahr besteht.

Der Erfindung liegt nun die Aufgabe zugrunde, ein kompakt zusammenfaltbares Spritzgestänge, welches in der zusammengefalteten Stellung wenig Raum beansprucht, so wie in eine Lage zu bringen ist, in der alle in dem Spritzgestänge angeordneten Spritzdüsen nach unten weisen, zu schaffen, wobei das zusammengefaltete Spritzgestänge nicht die seitliche Zugänglichkeit des Spritzmitteltanks der Feldspritze behindert.

Diese Aufgabe wird erfindungsgemäß dadurch gelöst, daß der jeweilige innerste Abschnitt des Spritzgestänges im Gegensatz zu den Achsen der übrigen Gelenke mit einem Gelenk angelenkt ist, dessen Schwenkachse zumindest annähernd horizontal und in Fahrtrichtung der Feldspritze verläuft. Infolge dieser Maßnahmen können die jeweils seitlich die Feldspritze erheblich überragenden Teile des Spritzgestänges zu einem kompakten Paket zusammengefaltet werden. Dieses kompakt zusammengefaltete Paket kann dann um das innerste Gelenk, dessen Schwenkachse in Fahrtrichtung verläuft, hochgeklappt und in eine Stellung hinter dem Tank der Feldspritze gebracht werden. In dieser Transportstellung ist der Tank der Feldspritze von der Seite her sehr bequem und ohne Störung irgendwelcher Gestängeteile direkt zugänglich. Weiterhin können die zusammengefalteten Pakete in eine waagerechte Stellung gebracht werden, in der die Spritzmittelleitungen und die Düsen, die in dem Spritzgestänge untergebracht sind, bequem gereinigt werden, ohne daß das Spritzgestänge in seine gestreckte Lage gebracht werden muß. Dieses ist vor allem bei Spritzgestängen für große Arbeitsbreiten von sehr großem Vorteil.

Weiterhin befindet sich das zusammengefaltete und hochgeklappte Spritzgestänge hinter dem Tank der Feldspritze in einem geschützten Bereich. Somit kann das sich in der Transportstellung befindliche Spritzgestänge nicht während des Transportes beschädigt werden, da es die Feldspritze nicht seitlich überragt.

Nun ist bereits durch die DE-OS 32 14 331 eine landwirtschaftliche Feldspritze mit einem Spritzgestänge bekannt geworden, wobei jeder seitliche Teil des Spritzgestänges aus zwei Abschnitten besteht. Der

4

innerste Abschnitt ist um eine in Fahrtrichtung verlaufende Achse schwenkbar. Der sich an diesen innersten Abschnitt anschließende zweite Teil des Spritzgestänges ist um eine aufrechte Achse um 90$^{o}$ nach vorn in Richtung des Tankes der Feldspritze klappbar. Somit kann dieses Spritzgestänge der DE-OS 32 14 331 so zusammengeklappt werden, daß der äußerste Teil des Spritzgestänges sich in der Transportstellung in nach vorn bzw. nach hinten ragender Stellung in dem Bereich oberhalb des Tankes der Feldspritze bzw. oberhalb des die Feldspritze ziehenden bzw. tragenden Schleppers. Es ist bei dem Spritzgestänge gemäß der DE-OS 32 14 331 nicht vorgesehen, daß sich an den innersten Teil des Spritzgestänges mehrere zusammenfaltbare Abschnitte des Spritzgestänges befinden. Nachteilig ist jedoch bei diesem Spritzgestänge, daß es in der Transportstellung noch sehr lang baut. Weiterhin ist noch von erheblichem Nachteil, daß Spritzgestänge mit sehr großen Arbeitsbreiten nicht möglich sind, da das Spritzgestänge nur in zwei Abschnitte unterteilt ist. Außerdem ergibt sich durch die hohe Lage des Spritzgestänges in der Transportstellung eine relativ große Kippgefahrt.

In einer bevorzugten Ausführungsform ist erfindungsgemäß vorgesehen, daß die um aufrechte Achsen schwenkbar mittels Gelenke miteinander verbundenen Teile um 180$^{o}$ aus ihrer gestreckten in ihre zusammengefalteten Lage unmittelbar aneinander zick-zack-förmig einklappbar zueinander angeordnet sind. Hierdurch ergibt sich ein äußerst kompaktes Paket des Spritzgestänges in der Transportstellung. Hierbei ist erfindungsgemäß vorgesehen, daß der an das um die horizontale Achse mittels eines aufrechten Gelenks anschließende Abschnitt um 180$^{o}$ direkt an diesen innersten Abschnitt heranschwenkbar ist. Der an den innersten Abschnitt des Spritzgestänges jeweils anschließende Abschnitt des Spritzgestänges ist derartig an den innersten Teilen heranschwenkbar, daß er von dem Spritzmitteltank wegschwenkbar und an die an den Spritzmitteltank bzw. der Feldspritze bzw. der die Feldspritze ziehenden Schlepper abgewandten Seite heranklappbar ist.

In einer Ausführungsform ist erfidungsgemäß vorgesehen, daß das innerste Teil zusätzlich zu dem Gelenk mit der Horizontalachse mit einem weiteren Gelenk, dessen Gelenkachse aufrecht verläuft, angeordnet ist. Hierdurch ist es möglich, das zusammengefaltete und hochgeklappte Gestänge um die aufrechte Achse an den Tank der Feldspritze heranzuschwenken, so daß das zusammengefaltete Spritzgestänge sich sehr dicht an dem Tank der Feldspritze befindet und den Tank der Feldspritze nicht sehr weit nach hinten überragt. Hierdurch ergibt sich ein Gelenk, daß kreuzgelenkähnlich ausgebildet ist. Auch wird hierdurch eine Schwerpunktverschiebung in Richtung der Mitte der Feldspritze und nach vorn erreicht.

Der gleiche Effekt läßt sich jedoch auch dadurch erreichen, daß die Gelenkachse des Gelenkes, mit dem der innerste Abschnitt des Spritzgestänges an der Felspritzes schräg verläuft und zwar von hinten unten nach schräg vorn oben zur Außenseite des Tankes der Feldspritze hin verläuft.

Weiterhin ist erfindungsgemäß vorgesehen, daß die an den innersten Teil sich anschließenden übrigen Abschnitte des Spritzgestänges zumindest bis auf den äußersten Abschnitt aus zumindest teilweise bzw. überwiegend baugleichen Baugruppen bestehen. Hierdurch wird erreicht, daß das Spritzgestänge aus gleichen Baugruppen aufgebaut werden kann, so daß nur sehr wenige verschiedene Abschnitte von Spritzgestängen hergestellt werden müssen.

Weitere Einzelheiten sind den übrigen Unteransprüche, der Beispielsbeschreibung sowie den Zeichnungen zu entnehmen.

Hierbei zeigen

Fig. 1 eine erfindungsgemäß ausgerüstete Feldspritze mit einem sich in Arbeitsstellung befindlichen Spritzgestänge in der Ansicht von hinten,

Fig. 2 die gleiche Feldspritze mit dem sich in Arbeitsstellung befindlichem Spritzgestänge in der Ansicht von oben,

Fig. 3 die Feldspritze mit den zusammengefalteten äußeren Abschnitten des Spritzgestänges in der Ansicht von oben,

Fig. 4 die Feldspritze mit dem in Transportstellung zusammengeklappten Spritzgestänge in der Ansicht von oben,

Fig. 5 die Feldspritze mit den in Transportstellung zusammengeklappten Spritzgestänge in der Ansicht von hinten,

Fig. 6 eine weitere Feldspritze mit einem anders ausgebildeten Spritzgestänge, welches sich in der Arbeitsstellung befindet, in der Ansicht von hinten,

Fig. 7 die Feldspritze gemäß Fig. 6 mit dem Spritzgestänge, welches sich in der Arbeitsstellung befindet, in der Ansicht von oben,

Fig. 8 die Feldspritze gemäß Fig. 6 mit dem Spritzgestänge, dessen äußere Abschnitte zusammengefaltet sind, in der Ansicht von oben,

Fig. 9 die Feldspritze gemäß Fig. 6 mit dem in Transportstellung zusammengeklappten Spritzgestänge in der Ansicht von oben,

Fig. 10 die Feldspritze gemäß Fig. 6 mit dem in Transportstellung zusammengeklappten Spritzgestänge in der Ansicht von hinten,

Fig. 11 eine weitere Feldspritze mit einem anders ausgebildeten Spritzgestänge, welches sich in der Arbeitsstellung befindet, in der Ansicht von hinten,

Fig. 12 die Feldspritze gemäß Fig. 11 mit dem sich in Arbeitsstellung befindlichen Spritzgestänge in der Ansicht von oben,

Fig. 13 die Feldspritze gemäß Fig. 11 mit dem zusammengefalteten Spritzgestänge in der Ansicht von oben,

Fig. 14 die Feldspritze gemäß Fig. 11 mit dem in Transportstellung zusammengeklappten Spritzgestänge und

Fig. 15 die Feldspritze gemäß Fig. 11 mit in Transportstellung zusammengeklapptem Spritzgestänge in der Ansicht von hinten.

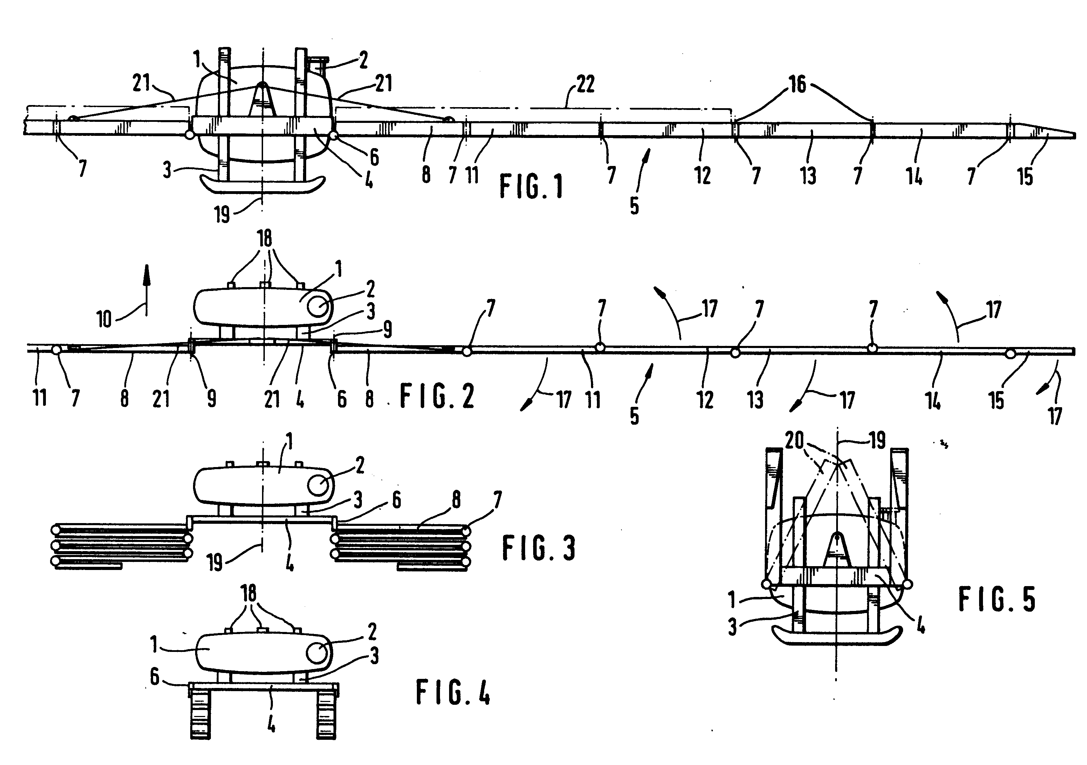

Die Feldspritze weist einen Tank 1 mit der seitlichen Einfüllöffnung 2 sowie den Rahmen 3 auf. Auf der Rückseite der Feldspritze ist an dem Rahmen 3 das Mittelstück 4 des Spritzgestänges 5 in Höhenrichtung verstellbar in bekannter und daher nicht dargestellter Weise angeordnet. Das Spritzgestänge 5 ist in mehrere Abschnitte unterteilt, die mittels Gelenke 6 und 7 miteinander verbunden sind. Der innerste Abschnitt 8 des Spritzgestänges 5 ist an dem Mittelstück 4 mit dem Gelenk 6 angeordnet, dessen Schwenkachse 9 horizontal und in Fahrtrichtung 10 verläuft. Die an den innersten Abschnitt 8 sich anschließenden Abschnitte 11, 12, 13, 14 und 15 des Spritzgestänges 5 sind jeweils mit den Gelenken 7 miteinander verbunden, deren Schwenkachsen 16 aufrecht verlaufen. Somit ist der jeweils innerste Abschnitt 8 des Spritzgestänges 5 im Gegensatz zu den Achsen 16 der Gelenke 7 mit einem Gelenk 6 angelenkt, dessen Schwenkachse 9 horizontal und in Fahrtrichtung 10 der Feldspritze verläuft. Das in Fig. 1 und 2 dargestellte Spritzgestänge 5 befindet sich in seiner gestreckten Lage, die der Arbeitsstellung entspricht.

Mittels der Gelenke 6 und 7 ist das Spritzgestänge in eine zusammengefaltete Lage, die der Transportstellung entspricht, wie in den Fig. 4 und 5 zu bringen, wobei die zusammengefaltete Stellung, wie in Fig. 3 dargestellt, eine Zwischenposition bei dem Zusammenfalten des Spritzgestänges 5 entspricht.

Die um die aufrechten Achsen 7 schwenkbar mittels der Gelenke 7 miteinander verbundenen Teile 8, 11, 12, 13, 14 und 15 sind jeweils um 180$^{\circ}$ schwenkbar miteinander verbunden, so daß sie aus ihrer gestreckten in ihre zusammengefalteten Lage unmittelbar aneinander zick-zack-förmig zueinander einklappbar angeordnet sind. Um das Spritzgestänge 5 in die zusammengefaltete Lage gemäß Fig. 3 zu bringen, werden von Hand oder über eine nicht dargestellte zwangsweise Einklappvorrichtung die einzelnen Abschnitte 11, 12, 13, 14 und 15 in der durch die Pfeile 17 angedeuteten Richtung zusammengefaltet. Hierbei wird der äußere Teil 17 um 180$^{\circ}$ nach hinten direkt an den sich daran anschließenden Abschnitt 14 herangeklappt. Der Abschnitt 14 wird in Pfeilrichtung 17 nach vorn um 180$^{\circ}$ an den Abschnitt 13 herangeklappt. Der Abschnitt 13 wird zusammen mit den anderen Abschnitten 14 und 15 in Pfeilrichtung 17 nach hinten an den Abschnitt 12 herangeklappt. Weiterhin wird der Abschnitt 12 in Pfeilrichtung 17 um 180° nach vorn an den Abschnitt 11 herangeklappt. Schließlich wird noch der Abschnitt 11 in Pfeilrichtung 17 zusammen mit den übrigen Abschnitten 12, 13, 14 und 15 in Pfeilrichtung 17 um 180° nach hinten an den innersten Abschnitt 8 des Spritzgestänges 5 herangeklappt. Somit ist der an das um die horizontale Achse 9 mittels des aufrechten Gelenkes 7 anschließende Abschnitt 11 zusammen mit den Abschnitten 12,13,14 und 15 um 180° direkt an diesen innersten Abschnitt 8 heranschwenkbar. Die einzelnen Abschnitte 8, 11, 12, 13, 14 und 15 nehmen in ihrer zusammengefalteten Stellung, die der Transportstellung entspricht, parallel zueinander verlaufende Stellungen ein, wie dies in Fig. 3 dargestellt ist. Somit sind also die um die aufrechten Achsen 7 schwenkbar mittels der Gelenke 7 miteinander verbundenen Teile 8, 11, 12,13, 14 und 15 um 180° aus ihrer gestreckten in ihre zusammengefalteten Lage unmittelbar aneinander zick-zack-förmig einklappbar.

Wenn die einzelnen Abschnitte 11, 12, 13, 14 und 15 des Spritzgestänges in die in Fig. 3 dargestellte Stellung gebracht sind, wird dieses zusammengefaltete Paket der einzelnen Abschnitte des Spritzgestänges 5 um die durch das Gelenk 6 verlaufende Schwenkachse 9 um 90° in die in Fig. 4 bzw. Fig. 5 dargestellte Transportstellung geschwenkt. In dieser Transportstellung befindet sich das Spritzgestänge 5 in seiner zusammengefalteten Stellung hinter dem Tank 1 der Feldspritze, d.h. daß Spritzgestänge ist nach hinten hinter dem Tank 1 auf die den Dreipunktkuppelelementen 18 abgewandten Seite des Tankes 1 eingeklappt. Somit befindet sich das, das zusammengefaltete Spritzgestänge in der Transportstellung in die in Fig. 5 mit durchzogenen Linien eingezeichnete Stellung. Auch ist es jedoch möglich, das Spritzgestänge um die Schwenkachse 9 weiter als um 90°

hochzuschwenken und in die zu der Feldspritzenmitte 19 in die mit strichpunktierten Linien angedeutete Stellung 20 zu bringen.

Das Gelenk 6 ist auf der Unterseite des innersten Abschnittes 8 und des Mittelstückes 4 angeordnet. Das Spritzgestänge 5 wird durch die Spannelemente 21 in seiner gestreckten Lage gehalten. Die einzelnen Abschnitte 8, 11, 12, 13 und 14 sind baugleich ausgebildet. Somit läßt sich eine sehr rationelle Fertigung und Lagerhaltung erreichen. Bei großen Arbeitsbreiten kann es jedoch erforderlich sein, daß vor allem an die innersten Abschnitte 8, 11 und 12 die mit strichpunktierten Linien angedeuteten Verstärkungselemente 22 angeschraubt sind.

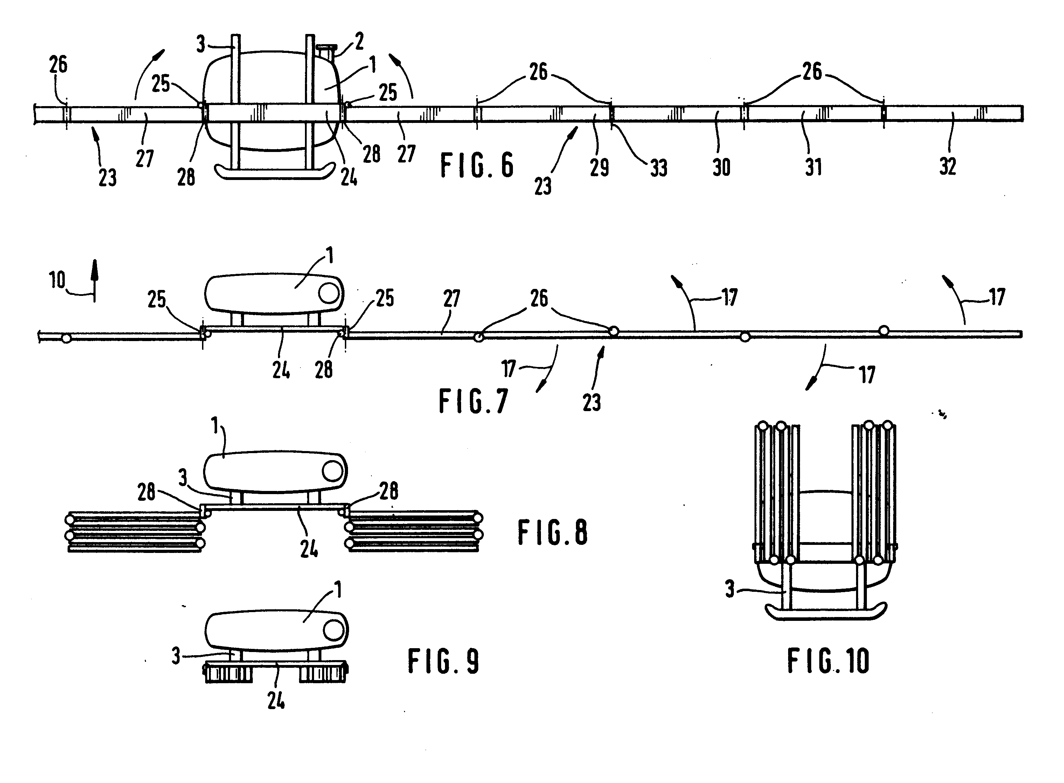

Das Spritzgestänge 23 gemäß den Fig. 6 bis 10 ist wiederum an einer Feldspritze angeordnet, die einen Tank 1 mit der seitliche Einfüllöffnung 2 sowie den Rahmen 3 aufweist. An dem Rahmen 3 ist das Mittelstück 24 des Spritzgestänges 23 befestigt. Das Spritzgestänge 23 ist in mehrere Abschnitte unterteilt, die mittels der Gelenke 25 und 26 miteiander verbunden sind. Der innerste Abschnitt 27 des Spritzgestänges 23 ist an dem Mittelstück 24 mit dem Gelenk 25 angeordnet, dessen Schwenkachse horizontal und in Fahrtrichtung 10 verläuft. Zusätzlich ist der innerste Abschnitt 27 noch mit dem weiteren Gelenk 28, welches sich zwischen dem Gelenk 25 und dem innersten Abschnitt 24 befindet und dessen Schwenkachse aufrecht verläuft, angelenkt. Die an den innersten Abschnitt 27 sich anschließenden Abschnitte 29, 30, 31 und 32 sind jeweils mit den Gelenken 26 miteinander verbunden, deren Schwenkachsen 33 aufrecht verlaufen. Somit ist der jeweils innerste Abschnitt 8 des Spritzgestänges 5 im Gegensatz zu den Achsen 33 der Gelenke 26 mit einem Gelenk 25 angelenkt, dessen Schwenkachse horizontal und in Fahrtrichtung 10 der Feldspritze verläuft. Das in den Fig. 6 und 7 dargestellte Spritzgestänge 23 befindet sich in seiner gestreckten Lage, die der Arbeitsstellung entspricht. Mittels der Gelenke 25, 26 und 28 ist das Spritzgestänge in eine zusammengefaltete Lage, die der Transportstellung entspricht, wie in den Fig. 9 und 10 dargestellt, zu bringen, wobei die zusammengefaltete Lage, wie in Fig. 8 dargestellt, eine Zwischenposition beim Zusammenfalten des Spritzgestänges 23 darstellt.

Die um die aufrechten Achsen 33 schwenkbar mittels der Gelenke 26 miteinander verbundenen Teile 27, 29, 30, 31, 32 sind jeweils um 180° schenkbar miteinander verbunden, so daß sie aus ihrer gestreckten Lage in ihre zusammengefalteten Lage unmittelbar aneinander zick-zack-förmig zueinander einklappbar angeordnet sind, wie dieses in Fig. 8 dargestellt ist. Um das Spritzgestänge 23 in die zusammengefaltete Lage gemäß Fig. 8 zu bringen, werden von Hand oder über eine nicht dargestellte Einklappvorrichtung die einzelnen Abschnitte 29, 30, 31 und 32 in die durch die Pfeile 17 abgedeuteten Richtungen zusammengefaltet. Die einzelnen Abschnitte 27, 29,30,31 und 32 nehmen in ihrer zusammengefalteten Stellung, die der Transportstellung entspricht, parallel zueinander verlaufende Stellungen ein, wie dieses in Fig. 8 dargestellt ist. Wenn die einzelnen Abschnitte 29,30,31 und 32 des Spritzgestänges 23 in die in Fig. 8 dargestellte Stellung gebracht sind, wird dieses zusammengefaltete Paket der einzelnen Abschnitte des Spritzgestänges 23 um die durch das Gelenk 25 verlaufende Schwenkachse um 90° hochgeschwenkt. Wenn das zusammengefaltete Paket der einzelnen Abschnitte des Spritzgestänges 23 hochgeschwenkt worden ist, werden jeweils diese zusammengefalteten Pakete der einzelnen Abschnitte des Spritzgestänges 23 noch zusätzlich um die aufrechte Achse des Gelenkes 28 um 90° an das Mittelstück 24 des Spritzgestänges herangeschwenkt, wie dieses in Fig. 9 dargestellt ist. In dieser Position befinden sich die zusammengefalteten Abschnitte des Spritzgestänges 23 in ihrer Transportstellung direkt dicht hinter dem Tank 1 der Feldspritze. Das Gelenk 25, welches auf der Oberseite des Spritzgestänges 23 angeordnet ist, und das Gelenk 28 sind kreuzgelenkähnlich miteinander verbunden. Weiterhin sind die Gelenke 25 sowie die Gelenke 28 in dem Außenbereich der Feldspritze angeordnet.

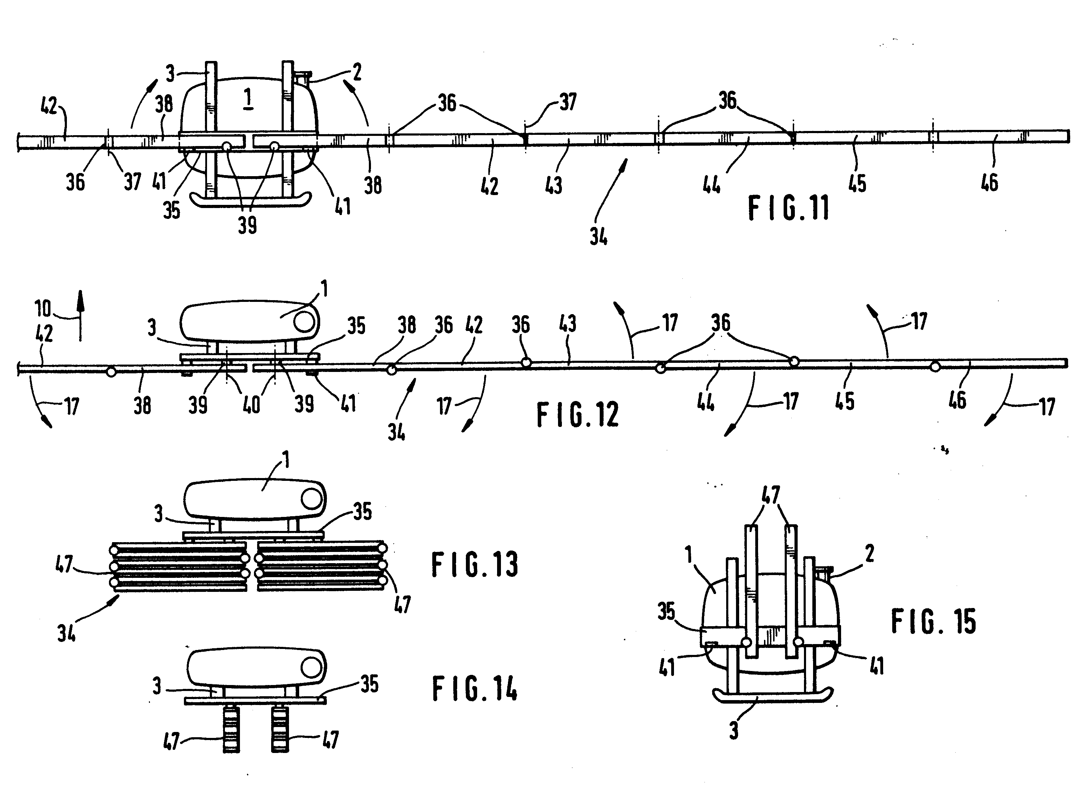

Das Spritzgestänge 34 gemäß den Fig. 11 bis 15 ist an dem Tank 1 mit der seitlichen Einfüllöffnung 2 sowie dem Rahmen 3 einer Feldspritze angeordnet. Auf der Rückseite der Feldspritze ist an dem Rahmen 3 die Halterung 35 für die Anbringung des Spritzgestänges 34 an dem Rahmen 3 der Feldspritze angeordnet. Das Spritzgestänge 34 ist in mehrere Abschnitte unterteilt, die mittels der Gelenke 36 miteinander verbunden sind. Die Schwenkachse 37 der Gelenke 36 verläuft aufrecht. Der innerste Abschnitt 38 ist jeweils mit dem Gelenk 39, dessen Schwenkachse 40 horizontal und in Fahrtrichtung 10 verläuft an dem Halterungsrahmen 35 befestigt. In dem Außenbereich des Halterungsträgers 35 sind die Anschläge 41 angeordnet, auf die der innerste Abschnitt 38 des Spritzgestänges 34 in seiner gestreckten Lage, die der Arbeitsstellung entspricht, aufliegt, so daß das Spritzgestänge 34 in einer horizontalen Lage gehalten wird. Die sich an den jeweiligen innersten Abschnitt 38 sich anschließenden Abschnitte 42,43,44,45 und 46 des Spritzgestänges 34 sind jeweils mit den Gelenken 36, deren Schwenkachse 37 aufrecht verlaufen, miteinander verbunden. Somit ist der jeweils innerste Abschnitt 38 des Spritzgestänges 34 im Gegensatz zu den Achsen 37 der Gelenke 36 mit einem Gelenk 39 angelenkt, dessen Schwenkachse 40 horziontal und in Fahrtrichtung 10 der Feldspritze verläuft. Das in den Fig. 11 und 12 dargestellte Spritzgestänge 34 befindet sich in einer gestreckten Lage, die der Arbeitsstellung entspricht.

Mittels der Gelenke 39 und 36 ist das Spritzgestänge 34 in eine zusammengefaltete Lage, die der Transportstellung entspricht, wie in den Fig. 14 und 15 dargestellt, zu bringen, wobei die zusammengefaltete Stellung, wie in Fig. 13 dargestellt, eine Zwischenposition bei dem Zusammenfalten des Spritzgestänges 34 darstellt.

Die um die aufrechten Achsen 37 schwenkbar mittels der Gelenke 36 miteinander verbundenen Teile 38, 42, 43, 44, 45 und 46 sind jeweils um 180$^o$ schwenkbar miteinander verbunden, so daß sie aus ihrer gestreckten Lage in ihre zusammengefalteten Lage unmittelbar aneinander zick-zack-förmig zueinander einklappbar angeordnet sind, wie dies die Fig. 13 zeigt. Um das Spritzgestänge 34 in die zusammengefaltete Lage gemäß Fig. 13 zu bringen, werden die einzelnen Abschnitte des Spritzgestänges 34 in die durch die Pfeile 17 angedeuteten Richtungen zusammengefaltet. Wenn die einzelnen Abschnitte des Spritzgestänges 34 in die in Fig. 13 dargestellte Stellung gebracht werden, werden diese zusammengefalteten Pakete 47 aus der in Fig. 13 dargestellten Position um die durch das Gelenk 39 verlaufende Schwenkachse 40 um 90$^o$ in die in Fig. 4 bzw. Fig. 5 dargestellte Transportstellung geschwenkt, so daß sie eine aufrechte Lage einnehmen. In dieser Transportstellung befindet sich das Spritzgestänge 34 in seiner zusammengefalteten Stellung hinter dem Tank 1 der Feldspritze.

Mit in die Erfindung soll eingeschlossen sein, daß die Schwenkachse 40 der Gelenke 39 nicht horizontal und auch nicht in Fahrtrichtung 10 verläuft, sondern schräg und zwar von hinten aus gesehen von der Mitte der Feldspritze aus von unten schräg nach vorn außen oben verläuft, so daß die zusammengefalteten Pakete 47 des Spritzgestänges 34 sich dicht bei dem Halterungsträger 35 befinden. Hierdurch würde erreicht werden, daß der Gesamtschwerpunkt der Feldspritze nach vorn verschoben wird, da sich die zusammengefalteten Pakete 47 auch mit ihrem äußersten Bereich sich sehr dicht an dem Halterungsstück 35 befinden. Das gleiche könnte man dadurch erreichen, daß man das Gelenk 39 als Kreuzgelenk ausbildet.

Amazonen-Werke

H. Dreyer GmbH & Co. KG

Am Amazonenwerk 9 - 13

4507 Hasbergen-Gaste

**ANR 1 000 667**

Patentansprüche

1.

Landwirtschaftliche Feldspritze mit einem Spritzgestänge, welches in mehrere Abschnitte unterteilt ist, die mittels Gelenke, deren Schwenkachsen aufrecht verlaufen, miteinander verbunden und in eine gestreckte Lage (Arbeitsstellung) sowie eine zusammengefaltete Stellung (Transportstellung) bringbar sind, dadurch gekennzeichnet, daß der jeweilige innerste Abschnitt (8,27,38) des Spritzgestänges (5,23,34) im Gegensatz zu den Achsen (16,30,37) der übrigen Gelenke (7,26,36) mit einem Gelenk (6,25,39) angelenkt ist, dessen Schwenkachse (9) zumindest annähernd horizontal und in Fahrtrichtung (10) der Feldspritze verläuft.

2.

Feldspritze nach Anspruch 1, dadurch gekennzeichnet, daß die um aufrechte Achsen (16,30,37) schwenkbar mittels Gelenke (7,26,36) miteinander verbundenen Teile (11,12,13,14, 15,29,30,31,32,42,43,44,45,46) um 180$^{\text{o}}$ aus ihrer gestreckten in ihre zusammengefalteten Lage unmittelbar aneinander zickzackförmig einklappbar zueinander angeordnet sind.

3.

Feldspritze nach Anspruch 2, dadurch gekennzeichnet, daß der an das um die horizontale Achse (9) mittels eines aufrechten Gelenkes (7,26,36) anschließende Abschnitt (11,29,42) um 180° direkt an diesen innersten Abschnitt (8,27,38) heranschwenkbar ist.

4.
Feldspritze nach Anspruch 2 und/oder 3, dadurch gekennzeichnet, daß die einzelnen Abschnitte (8,11,12,13,14,15,27,29,30,31,32,38,42,43,44,45,46) in ihrer zusammengefalteten Stellung (Transportstellung) jeweils zumindest annähernd parallel zueinander verlaufende Stellungen einnehmen.

5.
Feldspritze nach Anspruch 1, dadurch gekennzeichnet, daß das innerste Teil (27) zusätzlich zu dem Gelenk (25) mit der horizontalen Achse mit einem weiteren Gelenk (28), dessen Gelenkachse aufrecht verläuft, angeordnet ist.

6.
Feldspritze nach Anspruch 5, dadurch gekennzeichnet, daß das Gelenk, mit dem der innerste Abschnitt (27) an der Feldspritze angelenkt ist, kreuzgelenkähnlich ausgebildet ist.

7.
Feldspritze nach Anspruch 1, dadurch gekennzeichnet, daß die Gelenkachse des Gelenkes, mit dem der innerste Abschnitt an der Feldspritze angelenkt ist, schräg nach vorn und unten verläuft.

8.
Feldspritze mit einem Spritzgestänge, welches in mehrere Abschnitte unterteilt, die mittels Gelenke, deren Schwenkachse vorzugsweise aufrecht verläuft, miteinander verbunden und in eine gestreckte Lage (Arbeitsstellung) sowie eine zusammengefaltete Stellung (Transportstellung) bringbar sind, insbesondere nach Anspruch 1, dadurch gekennzeichnet, daß die an den innersten Teil (8,27,38) sich anschließenden übrigen Abschnitte (11,12,13,14,29, 30,31,32,42,43,44,45,46) zumindest bis auf den äußersten Abschnitt (15) aus zumindest teilweise bzw. überwiegend baugleich Baugruppen bestehen.

9.
Feldspritze nach Anspruch 8, dadurch gekennzeichnet, daß die an den innersten Teil (8,27,38) sich anschließenden übrigen Abschnitte (11,12,13,14,29,30,31,32,42,44,45,46) zumindest bis auf den äußersten Abschnitt (15) baugleich ausgebildet sind.

10.
Feldspritze nach Anspruch 1, dadurch gekennzeichnet, daß die Achse des innersten Gelenkes schräg und zur Horizontalen und zur Senkrechenten geneigt verläuft.

11.
Feldspritze nach Anspruch 1, dadurch gekennzeichnet, daß die innersten Gelenke (39) in der Nähe der Feldspritzenmitte angeordnet sind.

12.
Feldspritze nach Anspruch 1. dadurch gekennzeichnet, daß die innersten Gelenke (6,25,26) in dem Außenbereich der Feldspritze angeordnet sind.

FIG.1

FIG.2

FIG.3

FIG.4

FIG.5

1/3

0212235

FIG.6

FIG.7

FIG.8

FIG.9

FIG.10

2/3

0212235

FIG.11

FIG.12

FIG.13

FIG.14

FIG. 15

0212235